# FASCICULE DE BREVET EUROPEEN

(11) **EP 4 391 351 B1**
(45) Date de publication et mention de la délivrance du brevet: **03.09.2025**
(21) Numéro de dépôt: 23215415.3
(22) Date de dépôt: 11.12.2023
(51) Int. Cl.: H02P 1/44, H02P 25/04, H02P 25/18

(54) **PROCÉDÉ DE DÉMARRAGE D'UN MOTEUR ÉLECTRIQUE DE TYPE ASYNCHRONE MONOPHASÉ À CONDENSATEUR PERMANENT, ET ACTIONNEUR ÉLECTROMÉCANIQUE ASSOCIÉ COMPRENANT UN TEL MOTEUR ÉLECTRIQUE**
VERFAHREN ZUM STARTEN EINES EINPHASIGEN ASYNCHRONMOTORS MIT EINEM PERMANENTEN KONDENSATOR UND ELEKTROMECHANISCHER AKTUATOR DAMIT
METHOD FOR STARTING AN ELECTRIC MOTOR OF SINGLE-PHASE ASYNCHRONOUS TYPE WITH PERMANENT CAPACITOR, AND ASSOCIATED ELECTROMECHANICAL ACTUATOR COMPRISING SUCH AN ELECTRIC MOTOR

(30) Priorité: 23.12.2022 FR 2214404
(43) Date de publication de la demande: 26.06.2024
(73) Titulaire: Somfy Activites SA, 74300 Cluses (FR)
(72) Inventeur: BRUNO, Serge, 74300 CLUSES (FR)
(74) Mandataire: Germain Maureau

(56) Documents cités:
- EP-A1- 1 729 408
- EP-A2- 1 186 741
- FR-A1- 2 879 047

## Description

### Domaine Technique

La présente invention concerne un procédé de démarrage d'un moteur électrique de type asynchrone à condensateur permanent. L'invention porte aussi sur un actionneur électromécanique comprenant un tel moteur électrique et des moyens de mise en œuvre d'un tel procédé.

### Etat de la Technique

Un moteur électrique de type asynchrone monophasé à condensateur permanent est configuré pour être raccordé électriquement à un conducteur de phase et un conducteur de neutre d'une source de tension alternative. Le stator du moteur électrique comprend deux enroulements, un enroulement des deux enroulements, appelé enroulement principal, est relié électriquement en série avec un interrupteur, l'autre enroulement appelé enroulement auxiliaire est relié électriquement en série avec un condensateur de déphasage et l'interrupteur. Une unité électronique de contrôle comprenant un dispositif de détection du passage au zéro secteur est configurée pour, lorsqu'un ordre de commande lui est communiqué, démarrer le moteur électrique directement par une commande de l'interrupteur en pleine onde par rapport à la tension alternative, cette commande pleine onde permettant à la fois d'amorcer l'entrainement en rotation du moteur électrique et de maintenant l'entrainement en rotation du moteur électrique.

L'unité électronique de contrôle comprend en outre un circuit résistif connecté électriquement entre le conducteur de phase et le conducteur de neutre et configuré pour alimenter électriquement l'unité électronique de contrôle à partir de la source de tension alternative. La valeur d'impédance série du circuit résistif est généralement dimensionnée pour permettre au moteur électrique de démarrer en commande pleine onde. En veille, c'est-à-dire lorsque le moteur électrique est à l'arrêt et qu'aucun ordre de commande ne lui est communiqué, l'unité électronique de contrôle présente donc un niveau de consommation d'énergie électrique directement lié à la valeur d'impédance série du circuit résistif.

Si cette valeur de consommation d'énergie électrique dépasse un seuil prédéterminé, par exemple de 0,5 watts fixé pour répondre aux exigences normatives de réduction de consommation en veille des produits électriques, il est souhaitable d'augmenter la valeur de l'impédance série du circuit résistif afin de réduire cette valeur de consommation d'énergie électrique. Cependant, une telle modification entraine une réduction de l'énergie électrique disponible au démarrage du moteur électrique et peut ainsi empêcher l'amorçage de l'entrainement en rotation du moteur électrique.

On connait également le document EP 1 186 741 A2 qui divulgue un procédé de détermination du sens dans lequel un moteur AC de store vénitien va tourner, dans lequel le triac reçoit une seule impulsion d'allumage, l'impulsion d'allumage provoquant un bref déphasage entre une première ligne reliée à une tension alternative et une deuxième ligne reliée à la première ligne via un condensateur du moteur AC de store vénitien. Ce déphasage est détecté par l'unité de commande du moteur AC de store vénitien et permet de déterminer dans quel sens le moteur AC de store vénitien va tourner.

Il est donc souhaitable de pouvoir disposer d'une unité électronique de contrôle consommant au maximum 0,5 watts en veille tout en permettant l'amorçage de l'entrainement en rotation du moteur électrique et le maintien de l'entrainement en rotation du moteur électrique.

### Résumé de l'invention

L'invention est définie aux revendications indépendantes 1 et 4, définissant respectivement un procédé et un dispositif.

Des modes de réalisation concernent un procédé de démarrage d'un moteur électrique configuré pour être raccordé électriquement à un conducteur de phase et à un conducteur de neutre d'une source de tension alternative, le moteur électrique comprenant un stator, le stator du moteur électrique comprenant deux enroulements, les deux enroulements comprenant chacun une extrémité commune de sorte à les relier électriquement ensemble, l'extrémité commune étant reliée électriquement au conducteur de neutre par l'intermédiaire d'un interrupteur, chacun des deux enroulements comprenant une autre extrémité constituant respectivement une première borne de phase et une deuxième borne de phase, la première borne de phase étant reliée électriquement à la deuxième borne de phase par l'intermédiaire d'un condensateur de déphasage, le conducteur de phase étant sélectivement soit raccordé électriquement à la première borne de phase pour commander l'entrainement en rotation du moteur électrique dans un premier sens, soit raccordé électriquement à la deuxième borne de phase pour commander l'entrainement en rotation du moteur électrique dans un deuxième sens, le deuxième sens étant opposé au premier sens, l'interrupteur étant piloté par une unité électronique de contrôle, l'unité électronique de contrôle étant configurée pour détecter le passage à zéro de la tension alternative. Le procédé de démarrage est mis en oeuvre par l'unité électronique de contrôle, et l'unité électronique de contrôle commande, pendant une période de démarrage, l'interrupteur en angle de phase par rapport à la tension alternative, puis, à la suite de la période de démarrage, commande l'interrupteur en pleine onde par rapport à la tension alternative.

L'unité électronique de contrôle comprend un dispositif de détection de passage à zéro de la tension alternative.

L'unité électronique de contrôle comprend un dispositif de détection de passage à zéro de la tension alternative, et la commande de l'interrupteur en angle de phase est constituée d'une première série d'impulsions, chaque impulsion de la première série d'impulsions étant émise en angle de phase par rapport à chaque instant de passage à zéro de la tension alternative et ayant une première largeur, et en ce que la commande de l'interrupteur en pleine onde est constituée d'une deuxième série d'impulsions, chaque impulsion de la deuxième série d'impulsions étant émise en synchronisme avec chaque instant de passage à zéro de la tension alternative, la première largeur et la deuxième largeur étant adaptées pour maintenir l'interrupteur dans un état fermé entre chaque impulsion de la première série d'impulsions et entre chaque impulsion de la deuxième série d'impulsions.

Selon un mode de réalisation, l'angle de phase de la commande de l'interrupteur en angle de phase est compris entre un vingtième et un huitième d'une période de la tension alternative.

Selon un mode de réalisation, l'interrupteur est constitué par un triac ou par deux thyristors montés tête-bêche.

Selon un mode de réalisation, la durée de la période de démarrage est déterminée de sorte à ce que l'entrainement en rotation du moteur électrique soit amorcé pendant la période de démarrage.

Des modes de réalisation peuvent également concerner un actionneur électromécanique comprenant au moins moteur électrique configuré pour être raccordé électriquement à un conducteur de phase et à un conducteur de neutre d'une source de tension alternative, le moteur électrique comprenant un stator, le stator du moteur électrique comprenant deux enroulements, les deux enroulements comprenant chacun une extrémité commune de sorte à les relier électriquement ensemble, l'extrémité commune étant reliée électriquement au conducteur de neutre par l'intermédiaire d'un interrupteur, chacun des deux enroulements comprenant une autre extrémité constituant respectivement une première borne de phase et une deuxième borne de phase, la première borne de phase étant reliée électriquement à la deuxième borne de phase par l'intermédiaire d'un condensateur de déphasage, le conducteur de phase étant sélectivement soit raccordé électriquement à la première borne de phase pour commander l'entrainement en rotation du moteur électrique dans un premier sens, soit raccordé électriquement à la deuxième borne de phase pour commander l'entrainement en rotation du moteur électrique dans un deuxième sens, le deuxième sens étant opposé au premier sens, l'interrupteur étant piloté par une unité électronique de contrôle, , caractérisé en ce que l'unité électronique de contrôle est configurée pour mettre en œuvre le procédé de démarrage tel que précédemment défini.

Selon un mode de réalisation, l'unité électronique de contrôle comprend un dispositif de détection de passage à zéro de la tension alternative.

Selon un mode de réalisation, l'actionneur électromécanique est configuré pour actionner un dispositif de chauffage et/ou de ventilation et/ou de climatisation.

Selon un mode de réalisation, le conducteur de phase comprend un commutateur configuré pour sélectivement soit relier électriquement la première borne de phase au conducteur de phase pour commander l'entrainement en rotation du moteur électrique dans un premier sens, soit relier électriquement la deuxième borne de phase au conducteur de phase pour commander l'entrainement en rotation du moteur électrique dans un deuxième sens, le deuxième sens étant opposé au premier sens.

Selon un mode de réalisation, l'actionneur électromécanique est configuré pour actionner un dispositif d'occultation.

Selon un mode de réalisation, l'interrupteur est constitué par un triac ou deux thyristors montés tête-bêche.

Selon un mode de réalisation, l'unité électronique de contrôle comprend en outre un circuit résistif relié électriquement à la première borne de phase, à la deuxième borne de phase, et au conducteur de neutre, le circuit résistif étant configuré pour alimenter électriquement l'unité électronique de contrôle à partir de la source de tension alternative lorsque le conducteur de phase est raccordé électriquement à l'une ou l'autre des deux bornes de phase.

### Brève description des figures

La présente invention sera bien comprise à l'aide de la description qui suit en référence aux figures annexées, dans lesquelles des signes de références identiques correspondent à des éléments structurellement et/ou fonctionnellement identiques ou similaires.
La figure 1 représente schématiquement un actionneur comprenant un moteur électrique et une unité électronique de contrôle du moteur électrique selon un premier mode de réalisation.
La figure 2 représente schématiquement un actionneur comprenant un moteur électrique et une unité électronique de contrôle du moteur électrique selon un deuxième mode de réalisation.
La figure 3 représente des étapes d'un procédé de démarrage selon un mode de réalisation.
La figure 4 représente un chronogramme de différents signaux transitant dans l'unité électronique de contrôle et dans le moteur électrique, selon le premier mode de réalisation ou le deuxième mode de réalisation.

### Description détaillée

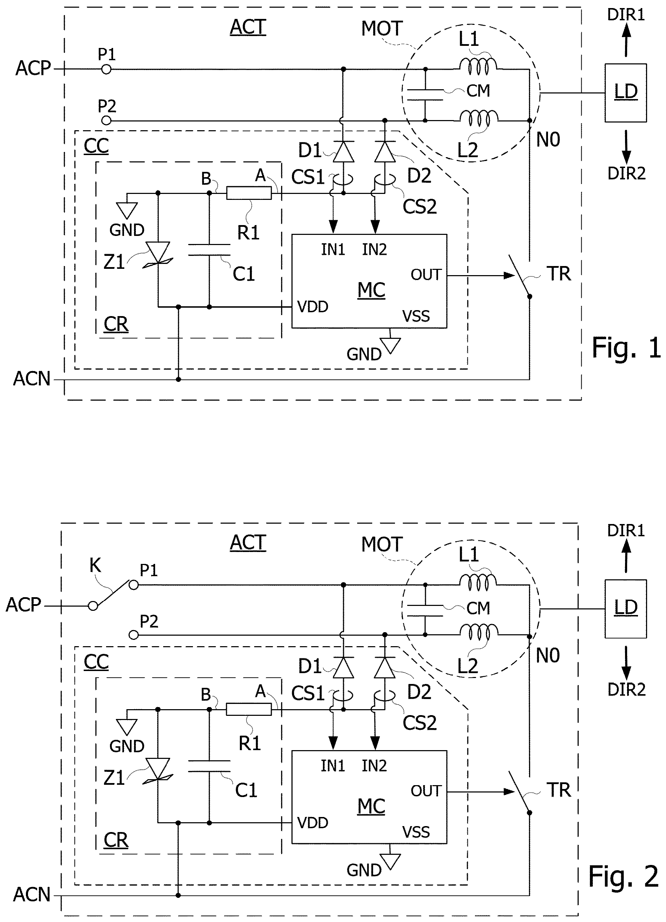

La figure 1 représente un actionneur électromécanique ACT selon un premier mode de réalisation de l'invention. L'actionneur électromécanique ACT peut être configuré pour actionner un dispositif de chauffage et/ou de ventilation et/ou de climatisation.

L'actionneur électromécanique ACT est configuré pour être raccordé électriquement à un conducteur de phase ACP et à un conducteur de neutre ACN d'une source de tension alternative U0, pouvant être par exemple un réseau électrique de distribution d'une tension alternative appelé couramment « secteur », la tension alternative U0 pouvant être par exemple de type 230 V - 50 Hz. La tension électrique de la source de tension alternative présente entre le conducteur de phase ACP et le conducteur de neutre ACN est appelée par la suite tension alternative U0. L'actionneur électromécanique ACT est configuré pour être alimenté électriquement, autrement dit est alimenté électriquement par la tension alternative U0.

L'actionneur électromécanique ACT comprend un moteur électrique MOT de type asynchrone monophasé à condensateur permanent, une unité électronique de contrôle CC, et un interrupteur TR.

Le moteur électrique MOT comprend un stator et un rotor. Le stator du moteur électrique MOT comprend deux enroulements L1, L2. Les deux enroulements L1, L2 comprennent chacun une extrémité commune N0 de sorte à les relier électriquement ensemble, l'extrémité commune N0 étant reliée électriquement au conducteur de neutre ACN par l'intermédiaire de l'interrupteur TR. Chacun des deux enroulements L1, L2 comprend une autre extrémité constituant respectivement une première borne de phase P1 et une deuxième borne de phase P2. La première borne de phase P1 est reliée électriquement à la deuxième borne de phase P2 par l'intermédiaire d'un condensateur de déphasage CM, autrement dit, le condensateur de déphasage CM est disposé entre la première borne de phase P1 et la deuxième borne de phase P2. Le condensateur de déphasage CM constitue ici le condensateur permanent d'un moteur électrique de type asynchrone monophasé à condensateur permanent. Le condensateur de déphase CM peut éventuellement être disposé dans l'actionneur électromécanique ACT et en dehors du moteur électrique MOT. Chaque enroulement des deux enroulements L1, L2 peut être constitué d'un ou plusieurs bobinages.

Ici, l'enroulement L1 dont l'extrémité, constituant une première borne de phase P1, est raccordée électriquement au conducteur de phase ACP, est qualifié d'enroulement principal, l'autre enroulement L2 étant qualifié d'enroulement auxiliaire. Ainsi, lorsqu'une tension électrique est appliquée entre la première borne de phase P1 et l'extrémité commune N0, le condensateur de déphasage CM est placé en série avec le deuxième enroulement L2 et le moteur électrique MOT tourne dans un premier sens DIR1. L'enroulement L2 se trouvant en série avec le condensateur de déphasage CM est qualifié d'auxiliaire, l'autre enroulement L1 étant alors qualifié de principal. La tension électrique U2 présente aux bornes de l'enroulement L2 se trouvant en série avec le condensateur de déphasage CM est appelée tension auxiliaire, et la tension électrique U1 présente aux bornes de l'autre enroulement L1 étant alors appelée tension principale. Lorsque le conducteur de phase ACP est relié électriquement à la première borne de phase P1, la tension auxiliaire est déphasée d'un quart de période (90°) par rapport à la tension principale, la tension auxiliaire étant en avance sur la tension électrique principale.

Avantageusement, le moteur électrique MOT comprend, en outre, un frein d'immobilisation et un réducteur qui ne sont pas représentés.

L'unité électronique de contrôle CC comprend un circuit résistif CR, et un dispositif de détection de passage à zéro CS1, CS2 de la tension alternative U0.

Avantageusement, l'unité électronique de contrôle CC comprend, en outre, un circuit de traitement MC, le circuit de traitement MC comprenant un processeur ou un microcontrôleur, et au moins une mémoire, la mémoire pouvant être interne ou externe au processeur ou microcontrôleur. L'unité électronique de contrôle peut en outre être pilotée par un circuit de réception d'ordres à distance non représenté, tel que par exemple un récepteur d'ordres radioélectriques.

Le circuit résistif CR est relié électriquement à la première borne de phase P1, à la deuxième borne de phase P2, et au conducteur de neutre ACN. Le circuit résistif CR est configuré pour alimenter électriquement l'unité électronique de contrôle CC à partir de la source de tension alternative U0 lorsque le conducteur de phase ACP est raccordé électriquement à l'une ou l'autre des deux bornes de phase P1, P2.

Avantageusement, l'unité électronique de contrôle CC comprend une première diode D1 et une deuxième diode D2, l'anode de la première diode D1 étant reliée électriquement à la première borne de phase P1, l'anode de la deuxième diode D2 étant reliée électriquement à la deuxième borne de phase P2. Le circuit résistif CR comprend une première résistance R1, une diode Zener Z1, et un condensateur C1. L'anode de la première diode D1 et l'anode de la deuxième diode D2 sont reliées électriquement ensemble à une extrémité A de la première résistance R1, l'autre extrémité de la première résistance R1 constituant une masse électrique GND flottante de l'unité électronique de contrôle CC. La masse électrique GND flottante est reliée électriquement au conducteur de neutre ACN par l'intermédiaire de la diode Zener Z1 et du condensateur C1 connectés électriquement en parallèle. Le circuit de traitement MC est alimenté électriquement par une tension électrique présente aux bornes de la diode Zener Z1 et du condensateur C1, entre le conducteur de neutre ACN relié électriquement à une borne d'alimentation positive VDD du circuit de traitement MC, et la masse électrique GND flottante de l'unité électronique de contrôle reliée électriquement à une borne d'alimentation négative VSS du circuit de traitement MC. Le détail de l'alimentation électrique du circuit de traitement MC, qui comprend des composants abaisseurs et régulateurs de tension électrique, n'est pas représenté sur les figures.

Avantageusement, le circuit résistif CR de l'unité électronique de contrôle CC est dimensionné de sorte à ce que la consommation d'énergie électrique en veille de l'unité électronique de contrôle CC soit inférieure ou égale à un seuil prédéterminé, le seuil prédéterminé étant de préférence inférieur ou égale à 0,5 watts. Avantageusement, la valeur de la résistance R1 du circuit résistif CR est comprise entre 59 kilo-ohms et 62 kilo-ohms, par exemple 61,9 kilo-ohms. Ainsi, l'impédance série du circuit résistif CR est dimensionnée de sorte à ce que l'unité électronique de contrôle CC consomme moins de 0,5 watts en veille, c'est-à-dire lorsque le moteur électrique MOT est à l'arrêt et qu'aucun ordre de commande ne lui est communiqué.

Le dispositif de détection de passage à zéro CS1, CS2, est configuré pour détecter chaque instant de passage à zéro (aussi appelé « passage au zéro secteur » ou « passage par le zéro secteur ») de la tension alternative U0. La détection de chaque instant de passage à zéro permet à l'unité électronique de contrôle CC de synchroniser la commande de l'interrupteur TR par rapport à chaque instant de passage à zéro de la tension alternative U0.

Il existe de nombreux dispositifs permettant de détecter chaque instant de passage à zéro de la tension alternative U0. Le dispositif de détection de passage à zéro CS1, CS2 pourrait, par exemple et selon une première variante, être constitué d'un capteur de courant CS1, le capteur de courant CS1 étant inséré dans l'unité électronique de contrôle CC pour détecter un courant circulant dans la première diode D1. Une sortie du premier capteur de courant CS1 est reliée électriquement à une première entrée logique IN1 du circuit de traitement MC. Le capteur de courant CS1 fait passer l'entrée logique IN1 à l'état haut lorsque la première diode D1 conduit. Le circuit de traitement MC est ainsi en mesure d'identifier l'état de conduction ou de blocage de la première diode D1.

Par capteur de courant, il faut entendre tout moyen permettant de détecter le passage d'un courant électrique dans une branche dans laquelle le capteur de courant est inséré. Le capteur de courant est préférentiellement un optocoupleur comprenant une diode électroluminescente reliée électriquement en série avec la diode dont on cherche à déterminer l'état de conduction, et configurée comme capteur de courant, cependant on peut utiliser d'autres dispositifs à semi-conducteurs, par exemple un transformateur d'intensité, un capteur magnétorésistif, ou un capteur à effet Hall. De manière équivalente, par capteur de courant il faut entendre ici tout moyen permettant d'identifier la conduction d'une diode. Ainsi, un dispositif permettant de détecter une tension électrique supérieure au seuil de conduction de la diode et capable de transmettre cette information de conduction à une entrée logique du circuit de traitement MC est ici un capteur de courant.

L'intérêt principal de ce montage est que l'instant de fin de conduction de la première diode D1 correspond à l'instant auquel la tension alternative U0 s'annule en passant d'une alternance négative à une alternance positive, autrement dit au passage à zéro de la tension alternative U0 lors du passage d'une alternance négative à une alternance positive. Ici, comme le conducteur de phase ACP est raccordé électriquement à la première borne de phase P1, l'instant de fin de conduction de la première diode D1 indique donc le passage à zéro de la tension alternative U0 lors du passage d'une alternance négative à une alternance positive. La fréquence de la tension alternative U0 étant connue car égale à la fréquence de la source de tension alternative U0, il suffit au circuit de traitement MC de calculer chaque instant de passage à zéro suivant l'instant de fin de conduction de la première diode D1 par la formule tn = t1 + n.(1 / 2.fs), ou t1 correspond à l'instant de fin de conduction de la première diode D1, n correspond l'une des l'itérations suivantes de l'instant de fin de conduction de la première diode D1, et fs correspond à la valeur de la fréquence de la source de tension alternative U0. Par exemple, si la valeur de la fréquence de la source de tension alternative U0 est égale à 50 Hertz, chaque instant de passage à zéro de la tension alternative U0 sera répété périodiquement toutes les 10 millisecondes à partir de l'instant de fin de conduction de la première diode D1.

Selon une deuxième variante, le dispositif de détection de passage à zéro CS1, CS2, pourrait être constitué d'un comparateur en boucle ouverte non représenté, relié électriquement au conducteur de phase ACP, et dont la sortie est reliée une entrée du circuit de traitement MC. Ce comparateur délivre un signal dont les fronts indiquent le passage par zéro de la tension alternative U0 et permettent dès lors au circuit de traitement MC de synchroniser la commande de l'interrupteur TR par rapport à chaque instant de passage à zéro de la tension alternative U0.

Avantageusement, l'interrupteur TR est formé par un triac ou par deux thyristors montés tête-bêche, c'est-à-dire en connectant la sortie de l'un des deux thyristors à l'entrée de l'autre thyristor et réciproquement.

Avantageusement, une borne de sortie OUT du circuit de traitement MC est relié électriquement à une borne de commande de l'interrupteur TR par l'intermédiaire d'un circuit de mise en forme SC de signal électrique. Le circuit de mise en forme SC de signal électrique est configuré pour mettre en forme un signal de commande de l'interrupteur TR émit par le processeur ou le microcontrôleur de manière à ce que le signal de commande soit compatible, autrement dit puisse coopérer avec l'interrupteur TR. Le détail du circuit de mise en forme SC de signal électrique qui comprend des composants discrets passifs et/ou actifs n'est pas représenté sur les figures.

Dans un deuxième mode de réalisation de l'invention, représenté à la figure 2, les éléments analogues à ceux du premier mode de réalisation portent les mêmes références et fonctionnent comme expliqué ci-dessus. Dans ce qui suit, on décrit principalement, que ce qui distingue ce deuxième mode de réalisation du premier mode de réalisation. Dans ce qui suit, lorsqu'un signe de référence est utilisé dans la description sans être reproduit sur la figure 2 ou reproduit sur la figure 2 sans être mentionné dans la description, il correspond à l'objet portant la même référence sur la figure 1.

On décrit maintenant, en référence à la figure 2, l'actionneur électromécanique ACT selon le deuxième mode de réalisation de l'invention et, plus particulièrement, l'unité électronique de contrôle CC de cet actionneur électromécanique ACT.

Ici, l'actionneur électromécanique ACT peut être configuré pour actionner un dispositif de fermeture, d'occultation et/ou de protection solaire, tel qu'un store motorisé, installé dans un bâtiment comportant une ouverture dans laquelle est disposée une fenêtre ou une porte. Ce dispositif de fermeture, d'occultation et/ou de protection solaire est équipé d'un écran. Le dispositif de fermeture, d'occultation et/ou de protection solaire est appelé par la suite dispositif d'occultation, le dispositif d'occultation comprenant l'écran.

Ici, l'unité électronique de contrôle CC comprend, en outre, un commutateur K. Le commutateur K présente au moins deux positions fermées dans lesquelles le conducteur de phase ACP est connecté électriquement à l'une ou l'autre des deux bornes de phase P1, P2. Le commutateur K peut être à commande manuelle, ou être commandé par une bobine de relais pouvant elle-même être pilotée par un circuit de réception d'ordres à distance non représenté, tel que par exemple un récepteur d'ordres radioélectriques. Le commutateur K peut, en outre, présenter une troisième position ouverte en addition des deux positions fermées, dans laquelle le conducteur de phase ACP est déconnecté électriquement des deux bornes de phase P1, P2. Le commutateur K peut éventuellement ne pas faire partie de l'actionneur électromécanique ACT.

Ici, selon que le commutateur K est présenté soit dans la première position fermée, soit dans la deuxième position fermée, le conducteur de phase ACP est sélectivement raccordé électriquement soit à la première borne de phase P1 pour commander l'entrainement en rotation du moteur électrique MOT dans un premier sens DIR1, soit à la deuxième borne de phase P2 pour commander l'entrainement en rotation du moteur électrique MOT dans un deuxième sens DIR2, le deuxième sens DIR2 étant opposé au premier sens DIR1.

Dans ce cas, l'enroulement L1, L2 dont l'extrémité, constituant une première borne de phase P1 ou une deuxième borne de phase P2, est sélectivement raccordée électriquement au conducteur de phase ACP, est qualifié d'enroulement principal, l'autre enroulement étant qualifié d'enroulement auxiliaire. Ainsi, selon qu'une tension est appliquée entre la première borne de phase P1 et l'extrémité commune N0, ou entre la deuxième borne de phase P2 et l'extrémité commune N0, soit le condensateur de déphasage CM est placé en série avec le deuxième enroulement L2 et le moteur électrique MOT tourne dans un premier sens DIR1, soit le condensateur de déphasage CM est placé en série avec le premier enroulement L1 et le moteur électrique MOT tourne dans un deuxième sens DIR2. L'enroulement L1, L2 se trouvant en série avec le condensateur de déphasage CM est qualifié d'auxiliaire, l'autre enroulement L1, L2 étant alors qualifié de principal. La tension électrique U1, U2 présente aux bornes de l'enroulement L1, L2 se trouvant en série avec le condensateur de déphasage CM est appelée tension auxiliaire, et la tension électrique présente aux bornes de l'autre enroulement L1, L2 étant alors appelée tension principale.

On suppose l'actionneur ACT initialement au repos. Si le commutateur K est basculé sur la première borne de phase P1, autrement dit si le conducteur de phase ACP est relié électriquement à la première borne de phase P1, les tension U1 et U2 sont déphasées d'un quart de période (90°), la tension auxiliaire U2 étant en avance sur la tension principale U1. Si le commutateur K est basculé sur la deuxième borne de phase P2, autrement dit si le conducteur de phase ACP est relié électriquement à la deuxième borne de phase P2, les tension U1 et U2 sont déphasées d'un quart de période (90°), la tension auxiliaire U1 étant en avance sur la tension principale U2.

Ici, le dispositif de détection de passage à zéro CS1, CS2, de la tension électrique U1, U2, présente aux bornes de l'enroulement principal pourrait par exemple et selon une première variante du deuxième mode de réalisation, être constitué de deux capteurs de courant CS1, CS2, les deux capteurs de courant CS1 et CS2 étant insérés dans l'unité électronique de contrôle CC pour détecter un courant circulant dans la première diode D1 et dans la deuxième diode D2. Une sortie du premier capteur de courant CS1 est reliée électriquement à une première entrée logique IN1 du circuit de traitement MC, et une sortie du deuxième capteur de courant CS2 est reliée électriquement à une deuxième entrée logique IN2 du circuit de traitement MC. Chaque capteur de courant CS1, CS2 fait passer l'entrée logique IN1, IN2 correspondante à l'état haut lorsque la diode correspondante conduit. Le circuit de traitement MC est ainsi en mesure d'identifier l'état de conduction ou de blocage de la première diode D1 et de la deuxième diode D2.

L'intérêt principal de ce montage est que, lorsque le conducteur de phase ACP est relié électriquement à la première borne de phase P1, l'instant de fin de conduction de la première diode D1 correspond à l'instant auquel la tension électrique U1 s'annule en passant d'une alternance négative à une alternance positive, autrement dit au passage à zéro de la tension électrique U1 lors du passage d'une alternance négative à une alternance positive, et que l'instant de début de conduction de la deuxième diode D2 correspond à l'instant auquel la tension électrique U2 s'annule en passant d'une alternance positive à une alternance négative, autrement dit au passage à zéro de la tension électrique U2 lors du passage d'une alternance positive à une alternance négative. De même, lorsque le conducteur de phase ACP est relié électriquement à la deuxième borne de phase P2, l'instant de fin de conduction de la deuxième diode D2 correspond à l'instant auquel la tension électrique U2 s'annule en passant d'une alternance négative à une alternance positive, autrement dit au passage à zéro de la tension électrique U2 lors du passage d'une alternance négative à une alternance positive, et l'instant de début de conduction de la première diode D1 correspond à l'instant auquel la tension électrique U1 s'annule en passant d'une alternance positive à une alternance négative, autrement dit au passage à zéro de la tension électrique U1 lors du passage d'une alternance positive à une alternance négative.

Ici, le dispositif de détection CS1, CS2 est configuré pour identifier l'enroulement principal en analysant les commutations instantanées entre la première diode D1 et la deuxième diode D2, déterminer un premier instant de passage à zéro de la tension alternative U0 en fonction de l'identification de l'enroulement principal, puis déterminer chaque instant de passage à zéro de la tension alternative U0.

Lorsque le circuit de traitement MC détecte, par l'intermédiaire des deux capteurs de courant CS1, CS2, une commutation instantanée de la deuxième diode D2 à la première diode D1, il identifie l'enroulement L1 comme étant l'enroulement principal, et détermine un premier instant de passage à zéro de la tension alternative U0 correspondant à un instant de fin de conduction de la première diode D1. Cet instant de fin de conduction de la première diode D1 indiquant le passage à zéro de la tension alternative U0 lors du passage d'une alternance négative à une alternance positive, il suffit au circuit de traitement MC de calculer chaque instant de passage à zéro suivant l'instant de fin de conduction de la première diode D1 par la formule tn = t1 + n.(1 / 2.fs), ou t1 correspond à l'instant de fin de conduction de la première diode D1, n correspond l'une des l'itérations suivantes de l'instant de fin de conduction de la première diode D1, et fs correspond à la valeur de la fréquence de la source de tension alternative U0.

Lorsque le circuit de traitement MC détecte, par l'intermédiaire des deux capteurs de courant CS1, CS2, une commutation instantanée de la première diode D1 à la deuxième diode D2, il identifie l'enroulement L2 comme étant l'enroulement principal, et détermine un premier instant de passage à zéro de la tension alternative U0 correspondant à un instant de fin de conduction de la deuxième diode D2. Cet instant de fin de conduction de la deuxième diode D2 indiquant le passage à zéro de la tension alternative U0 lors du passage d'une alternance négative à une alternance positive, il suffit au circuit de traitement MC de calculer chaque instant de passage à zéro suivant l'instant de fin de conduction de la deuxième diode D2 par la formule tn = t1 + n.(1 / 2.fs), ou t1 correspond à l'instant de fin de conduction de deuxième diode D2, n correspond l'une des l'itérations suivantes de l'instant de fin de conduction de la deuxième diode D2, et fs correspond à la valeur de la fréquence de la source de tension alternative U0.

Selon une deuxième variante du deuxième mode de réalisation, le dispositif de détection de passage à zéro CS1, CS2, pourrait être constitué de deux comparateurs en boucle ouverte non représentés, une entrée du premier comparateur étant reliée électriquement au conducteur de phase ACP, la sortie du premier comparateur étant reliée électriquement une entrée du circuit de traitement MC. Le comparateur délivre un signal dont les fronts indiquent le passage par zéro de la tension alternative U0, permettant dès lors au circuit de traitement MC de synchroniser la commande de l'interrupteur TR par rapport à chaque instant de passage à zéro de la tension alternative U0.

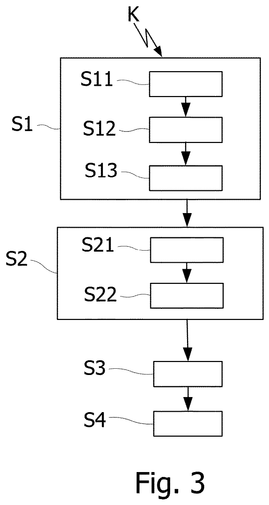

La figure 3 illustre des étapes S1 à S4 d'un procédé de démarrage d'un moteur électrique MOT de type asynchrone monophasé à condensateur permanent, selon un mode de réalisation. Le procédé de démarrage est mis en œuvre par l'unité électronique de contrôle CC.

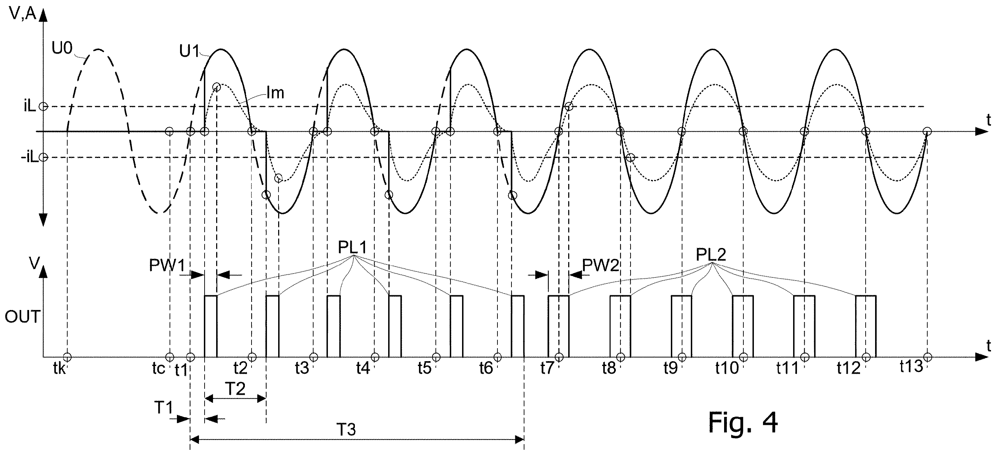

Les étapes S1 à S4 sont décrites dans ce qui suit, en correspondance avec la figure 4 qui représente un chronogramme temporel des tensions électriques U1 et U2 présentes aux bornes respectivement du premier enroulement L1 et du deuxième enroulement L2, dans le cas où le conducteur de phase ACP est raccordé électriquement à la première borne de phase P1. Ce cas permet d'illustrer conjointement le procédé de démarrage mis en œuvre pour un actionneur électromécanique ACT conforme au premier mode de réalisation et au deuxième mode de réalisation lorsque le commutateur K est basculé dans la première position. Dans ce cas, l'enroulement L1 est qualifié d'enroulement principal, l'enroulement L2 étant qualifié d'enroulement auxiliaire. Sur la figure 4, les périodes de conduction de la première diode D1 et de la deuxième diode D2 sont représentées par des doubles flèches.

Le procédé comprend une première étape S1 de détection de passage à zéro de la tension alternative U0.

Avantageusement, la première étape S1 peut être mise en œuvre à partir d'un instant tc prédéterminé. Avantageusement, la mise en œuvre de la première étape S1 est mise en œuvre par le circuit de traitement MC de l'unité électronique de contrôle CC lorsque le circuit de traitement MC détecte à l'instant tc l'accomplissement d'une condition prédéterminée ou d'une combinaison de conditions prédéterminées. Par exemple, le circuit de traitement MC peut déclencher la mise en œuvre de la première étape S1 lorsqu'une première condition d'arrêt du moteur électrique MOT est remplie, et qu'une deuxième condition de changement de position du commutateur K est remplie. Le changement de position du commutateur K peut être détecté par le circuit de traitement MC lorsque la séquence de commutation instantanée de la première diode D1 à la deuxième diode D2 change en une séquence de commutation instantanée de la deuxième diode D2 à la première diode D1, signifiant ainsi un basculement de la deuxième position fermée du commutateur K à la première position fermée du commutateur K. Une condition de déclenchement de la mise en œuvre de la première étape S1 peut aussi être la réception d'un ordre de commande reçu par le circuit de réception d'ordres à distance pilotant l'unité électronique de contrôle CC.

Avantageusement, la première étape S1 comprend une première sous-étape S11 de détermination de l'identité de l'enroulement principal du moteur électrique MOT, une deuxième sous-étape S12 de détection d'un premier instant de passage à zéro de la tension alternative U0, puis une troisième sous-étape S13 de détermination des instants de passage à zéro de la tension alternative U0 suivants le premier instant de passage à zéro de la tension alternative U0 détecté lors de la deuxième sous-étape S12. Lors de la première sous-étape S11 de détermination de l'identité de l'enroulement principal, le circuit de traitement MC peut lire dans la mémoire une donnée indiquant l'identité de l'enroulement principal, ou analyser l'ordre de commutation instantanée de la première diode D1 et de la deuxième diode D2.

Avantageusement, la première étape S1 peut être mise en œuvre à tout moment précédent l'exécution de la deuxième étape S2.

Avantageusement, la première étape S1 peut être répétée périodiquement pendant l'exécution de la deuxième étape S2 et/ou de la troisième étape S3, permettant ainsi à l'unité électronique de contrôle CC de s'adapter automatiquement lorsque la fréquence de la source de tension alternative U0 varie au cours du temps.

Le procédé de démarrage comprend, en outre, une deuxième étape S2 dans laquelle l'unité électronique de contrôle CC commande, pendant une période de démarrage T3, l'interrupteur TR en angle de phase par rapport à la tension alternative U0.

Avantageusement, l'angle de phase est compris entre un vingtième (π/10) et un huitième (π/4) d'une période de la tension alternative U0.

La commande de l'interrupteur TR en angle de phase est constituée d'une première série d'impulsions PL1, chaque impulsion de la première série d'impulsions PL1 étant émise en angle de phase par rapport à chaque instant de passage à zéro de la tension alternative U0, et ayant une largeur PW1 adaptée pour maintenir l'interrupteur TR dans un état fermé entre chaque impulsion de la première série d'impulsions PL1. Bien connue de la personne du métier, l'émission d'une impulsion en angle de phase par rapport à tension alternative d'alimentation signifie que l'impulsion est émise en retard d'une durée prédéterminée par rapport à l'instant de passage à zéro de la tension alternative. Comme illustré à la figure 4, chaque impulsion de la première série d'impulsion PL1 est émise avec un retard d'une durée prédéterminée T1 par rapport à l'instant correspondant de passage à zéro de la tension alternative U0.

Avantageusement, la première largeur PW1 est déterminée de sorte qu'un courant Im traversant le moteur à un instant correspondant au front descendant de chaque impulsion de la première série d'impulsion PL1 soit supérieur au courant de maintien iL de l'interrupteur TR, l'interrupteur TR étant constitué d'un triac ou de deux thyristors montés tête-bêche.

Pendant la période de démarrage T3, le circuit résistif CR est alimenté électriquement par l'énergie électrique présente à première borne de phase P1 et à la deuxième borne de phase P2, l'énergie électrique disponible à chaque instant décalé de la durée T1 par rapport à l'instant de passage à zéro de la tension alternative U0 étant strictement supérieure à l'énergie disponible pendant la période de démarrage T3 à chaque instant de passage à zéro de la tension alternative U0. De cette manière, l'interrupteur TR est maintenu dans un mode sous-alimenté dans lequel il reçoit une énergie électrique du circuit résistif CR juste suffisante pour le maintenir actif pendant la période de démarrage T3.

Avantageusement, la largeur PW1 de chaque impulsion de la première série d'impulsions PL1 peut être fixée à une valeur comprise entre 0,2 millisecondes et 0,5 millisecondes.

La deuxième étape S2 peut être constituée d'une première sous-étape S21 dans laquelle une première impulsion est émise avec un retard prédéterminé T1 par rapport à un premier instant de passage à zéro de la tension alternative U0, puis d'une deuxième sous-étape S22 dans laquelle, pendant une durée prédéterminée T3-T1 chaque impulsion suivant la première impulsion est émise périodiquement à un intervalle prédéterminé T2, l'intervalle prédéterminé T2 correspondant à la durée entre chaque instant de passage à zéro de la tension alternative U0.

Avantageusement, la période de démarrage T3 est déterminée de sorte que l'entrainement en rotation du moteur électrique MOT soit amorcé pendant la période de démarrage T3, autrement dit de sorte que le rotor du moteur électrique MOT ait vaincu le couple de démarrage du moteur électrique MOT. Dans l'exemple de la figure 4, la première série d'impulsions PL1 comprend six impulsions de commande de l'interrupteur TR. A cet effet, la période de démarrage T3 peut être fixée à une durée supérieure à 40 millisecondes, par exemple égale 100 millisecondes, ce qui correspond à un nombre d'impulsions PL1 émises supérieur à 4 et par exemple égal à 10.

Le procédé de démarrage comprend, en outre, une troisième étape S3 dans laquelle l'unité électronique de contrôle CC commande, suite à la période de démarrage T3, l'interrupteur TR en pleine onde par rapport à la tension alternative U0. La commande de l'interrupteur TR en pleine onde permet notamment de réduire les émissions électromagnétiques du moteur électrique MOT, et ainsi de rendre la commande du moteur électrique MOT conforme aux normes en vigueur.

La commande de l'interrupteur TR en pleine onde est constituée d'une deuxième série d'impulsions PL2. Chaque impulsion de la deuxième série d'impulsions PL2 est émise en synchronisme avec chaque instant de passage à zéro de la tension alternative U0. Chaque impulsion de la deuxième série d'impulsions PL2 présente une largeur PW2 adaptée pour maintenir l'interrupteur TR dans un état fermé entre chaque impulsion de la deuxième série d'impulsions PL2.

Avantageusement, la première largeur PW1 est déterminée de sorte qu'un courant Im traversant le moteur à un instant correspondant au front descendant de chaque impulsion de la deuxième série d'impulsion PL2 soit supérieur au seuil de courant de maintien iL de l'interrupteur TR, l'interrupteur TR étant constitué d'un triac ou de deux thyristors montés tête-bêche.

Avantageusement, la largeur PW2 de chaque impulsion de la deuxième série d'impulsions PL2 peut être fixée à une valeur comprise entre 1 millisecondes et 2 millisecondes, par exemple 1,2 millisecondes.

Avantageusement, chaque impulsion de la deuxième série d'impulsions PL2 est centrée sur l'instant de passage à zéro correspondant de la tension électrique U1, U2 présente aux bornes de l'enroulement principal. En variante, chaque front montant ou front descendant de chaque impulsion de la deuxième série d'impulsions PL2 est centré sur l'instant de passage à zéro correspondant.

Chaque impulsion de la deuxième série d'impulsions PL2 est émise sensiblement en synchronisme avec, autrement dit centrée sur chaque instant de passage à zéro de la tension alternative U0. Ici l'expression "sensiblement" est interprétée comme une caractéristique technique produite dans la marge de tolérance technique de sa méthode de fabrication. En effet, le détecteur de passage à zéro CS1, CS2 peut être constitué d'optocoupleurs ayant une grande variabilité, par exemple entre série de composants, avec la température ou à cause de perturbations lors de la mesure. Il en résulte qu'un instant de passage à zéro détecté par le détecteur de passage à zéro CS1, CS2 puisse être sensiblement décalé par rapport au réel instant de passage à zéro, et qu'en conséquence, chaque impulsion de la deuxième série d'impulsions PL2 soit sensiblement décalée par rapport au réel instant de passage à zéro correspondant.

Avantageusement, le procédé de démarrage comprend, en outre, une quatrième étape S4 dans laquelle l'unité électronique de contrôle interrompt la troisième étape S3 en réponse à l'accomplissement d'une condition d'arrêt du moteur électrique MOT. Une condition d'arrêt du moteur électrique MOT peut être la disparition des fronts montants sur les entrées IN1, IN2, c'est-à-dire lorsque le commutateur K est placé en position ouverte ou que le moteur se bloque, par exemple suite à la rencontre d'un obstacle.

Le procédé de démarrage décrit en référence aux figures 3 et 4 permet de démarrer le moteur électrique MOT avec un circuit résistif CR sous-dimensionné, par exemple avec une valeur de résistance R1 plus élevée, soit par exemple 69,90 kilo-ohms au lieu de 22 kilo-ohms. Avec une telle résistance de 69,90 kilo-ohms, la puissance électrique dissipée dans l'unité électronique de contrôle CC en veille atteint 0,5 watts au lieu de 0,9 watts lorsque la résistance R1 est fixée à 22 kΩ.

Selon un exemple de réalisation illustré par les figures 3 et 4, le moteur électrique MOT est alimenté par une tension alternative de 230 V - 50 Hz, la valeur fs de la fréquence de la source de tension alternative U0 étant ici égale à 50 Hertz. Dans cet exemple de réalisation, l'interrupteur TR est un triac, la valeur de la résistance R1 du circuit résistif CR est égale à 61,9 kilo-ohms.

On admet comme conditions initiales précédant un instant tk, que la valeur fs de la fréquence de la source de tension alternative U0 enregistrée dans la mémoire de l'unité électronique de contrôle CC, que le moteur électrique MOT est dans état de repos, que le commutateur K est positionné dans la deuxième position fermée dans laquelle la deuxième borne de phase P2 est reliée électriquement au conducteur de phase ACP, et que le circuit de traitement MC de l'unité électronique de contrôle CC a détecté que l'enroulement principal est l'enroulement L2 en analysant l'ordre de commutation instantanée de la première diode D1 à la deuxième diode D2. L'unité électronique de contrôle CC consomme 0,5 watts en veille.

A l'instant tk, le commutateur K est basculé de la deuxième position fermée à la première position fermée dans laquelle la première borne de phase P1 est reliée électriquement au conducteur de phase ACP. Une tension électrique U2 apparait aux bornes du deuxième enroulement L2, et une tension électrique U1 apparait aux bornes du premier enroulement L1, la tension électrique U2 étant en avance de 90° par rapport à la tension électrique U1.

L'unité électronique de contrôle CC détermine à l'instant tc une commutation instantanée de la deuxième diode D2 à la première diode D1, et qu'ainsi deux conditions d'exécution du procédé de démarrage sont remplies, la première condition correspondant à l'état de repos du moteur électrique MOT, la deuxième condition correspondant à un changement d'ordre de commutation instantanée entre la première diode D1 et la deuxième diode D2.

Le circuit de traitement MC de l'unité électronique de contrôle CC met en œuvre la première étape S1 dans laquelle il détecte à un instant t1 un premier instant t1 de passage à zéro de la tension électrique U1 présente aux bornes de l'enroulement principal, l'enroulement principal correspondant ici à l'enroulement L1. Le circuit de traitement MC détermine ensuite chaque instant tn de passage à zéro de la tension électrique U1 suivant le premier instant t1 en fonction de la valeur fs de la fréquence de la source de tension alternative U0 enregistrée dans la mémoire de l'unité électronique de contrôle CC.

Le circuit de traitement MC de l'unité électronique de contrôle CC met en œuvre la deuxième étape S2 dans laquelle il émet pendant une période de démarrage T3 égale à 52,5 millisecondes, une première série PL1 de six impulsions de commande du triac TR, chaque impulsion de la première série d'impulsions PL1 étant émise avec un retard de 2,5 millisecondes par rapport à chaque instant correspondant de passage à zéro de la tension alternative U0, et ayant une largeur PW1 de 0,5 millisecondes. L'entrainement en rotation dans le sens DIR1 du moteur électrique MOT est amorcé dès que la première impulsion de la première série d'impulsions PL1 est émise sur la gâchette du triac TR.

Le circuit de traitement MC de l'unité électronique de contrôle CC met en œuvre, suite à la deuxième étape S2, la troisième étape S3 dans laquelle il émet une deuxième série PL2 de six impulsions de commande du triac TR, chaque impulsion de la deuxième série d'impulsions PL2 étant émise en synchronisme par rapport à chaque instant correspondant de passage à zéro de la tension alternative U0, et ayant une largeur PW2 de 2 millisecondes. L'entrainement en rotation dans le sens DIR1 du moteur électrique MOT est maintenu pendant toute la durée d'émission de la deuxième série d'impulsions PL2.

Il apparaîtra clairement à l'homme de l'art que la présente invention est susceptible de diverses variantes de réalisation et diverses applications. En particulier, l'invention n'est pas limitée à des valeurs particulières de l'angle de phase de la commande de l'interrupteur TR en angle de phase. En effet, d'autres valeurs que celles indiquées ci-dessus peuvent convenir pour commander l'interrupteur.

## Revendications

1. Procédé de démarrage d'un moteur électrique (MOT) configuré pour être raccordé électriquement à un conducteur de phase (ACP) et à un conducteur de neutre (ACN) d'une source de tension alternative (U0), le moteur électrique (MOT) comprenant un stator, le stator du moteur électrique (MOT) comprenant deux enroulements (L1, L2), les deux enroulements (L1, L2) comprenant chacun une extrémité commune (N0) de sorte à les relier électriquement ensemble, l'extrémité commune (N0) étant reliée électriquement au conducteur de neutre (ACN) par l'intermédiaire d'un interrupteur (TR), chacun des deux enroulements (L1, L2) comprenant une autre extrémité constituant respectivement une première borne de phase (P1) et une deuxième borne de phase (P2), la première borne de phase (P1) étant reliée électriquement à la deuxième borne de phase (P2) par l'intermédiaire d'un condensateur de déphasage (CM), le conducteur de phase (ACP) étant sélectivement soit raccordé électriquement à la première borne de phase (P1) pour commander l'entrainement en rotation du moteur électrique (MOT) dans un premier sens (DIR1), soit raccordé électriquement à la deuxième borne de phase (P2) pour commander l'entrainement en rotation du moteur électrique (MOT) dans un deuxième sens (DIR2), le deuxième sens (DIR2) étant opposé au premier sens (DIR1), l'interrupteur (TR) étant piloté par une unité électronique de contrôle (CC), l'unité électronique de contrôle (CC) comprenant un dispositif de détection de passage à zéro (CS1, CS2) de la tension alternative (U0), **caractérisé en ce que** le procédé de démarrage est mis en œuvre par l'unité électronique de contrôle (CC), et **en ce que** l'unité électronique de contrôle (CC) commande pendant une période de démarrage (T3) l'interrupteur (TR) en angle de phase par rapport à la tension alternative (U0), puis, à la suite de la période de démarrage (T3), commande l'interrupteur (TR) en pleine onde par rapport à la tension alternative (U0), la commande de l'interrupteur (TR) en angle de phase étant constituée d'une première série d'impulsions (PL1), chaque impulsion de la première série d'impulsions (PL1) étant émise en angle de phase par rapport à chaque instant de passage à zéro de la tension alternative (U0) et ayant une première largeur (PW1), la commande de l'interrupteur (TR) en pleine onde étant constituée d'une deuxième série d'impulsions (PL2), chaque impulsion de la deuxième série d'impulsions (PL2) étant émise en synchronisme avec chaque instant de passage à zéro de la tension alternative (U0) et ayant une deuxième largeur (PW2), la première largeur (PW1) et la deuxième largeur (PW2) étant adaptées pour maintenir l'interrupteur (TR) dans un état fermé entre chaque impulsion de la première série d'impulsions (PL1) et entre chaque impulsion de la deuxième série d'impulsions (PL2).

2. Procédé de démarrage selon la revendication 1, **caractérisé en ce que** l'angle de phase de la commande de l'interrupteur (TR) en angle de phase est compris entre un vingtième et un huitième d'une période de la tension alternative (U0).

3. Procédé de démarrage selon l'une quelconque des revendications précédentes, **caractérisé en ce que** la durée de la période de démarrage (T3) est déterminée de sorte à ce que l'entrainement en rotation du moteur électrique (MOT) soit amorcé pendant la période de démarrage (T3).

4. Actionneur électromécanique (ACT) comprenant au moins moteur électrique (MOT) configuré pour être raccordé électriquement à un conducteur de phase (ACP) et à un conducteur de neutre (ACN) d'une source de tension alternative (U0), le moteur électrique (MOT) comprenant un stator, le stator du moteur électrique (MOT) comprenant deux enroulements (L1, L2), les deux enroulements (L1, L2) comprenant chacun une extrémité commune (N0) de sorte à les relier électriquement ensemble, l'extrémité commune (N0) étant reliée électriquement au conducteur de neutre (ACN) par l'intermédiaire d'un interrupteur (TR), chacun des deux enroulements (L1, L2) comprenant une autre extrémité constituant respectivement une première borne de phase (P1) et une deuxième borne de phase (P2), la première borne de phase (P1) étant reliée électriquement à la deuxième borne de phase (P2) par l'intermédiaire d'un condensateur de déphasage (CM), le conducteur de phase (ACP) étant sélectivement soit raccordé électriquement à la première borne de phase (P1) pour commander l'entrainement en rotation du moteur électrique (MOT) dans un premier sens (DIR1), soit raccordé électriquement à la deuxième borne de phase (P2) pour commander l'entrainement en rotation du moteur électrique (MOT) dans un deuxième sens (DIR2), le deuxième sens (DIR2) étant opposé au premier sens (DIR1), l'interrupteur (TR) étant piloté par une unité électronique de contrôle (CC), l'unité électronique de contrôle (CC) comprenant un dispositif de détection de passage à zéro (CS1, CS2) de la tension alternative (U0), **caractérisé en ce que** l'unité électronique de contrôle (CC) est configurée pour mettre en œuvre le procédé de démarrage conforme à l'une quelconque des revendications 1 à 3.

5. Actionneur électromécanique (ACT) selon la revendication précédente, **caractérisé en ce que** l'unité électronique de contrôle (CC) comprend un dispositif de détection de passage à zéro (CS1, CS2) de la tension alternative (U0).

6. Actionneur électromécanique (ACT) selon l'une quelconque des revendications 4 ou 5, **caractérisé en ce que** l'actionneur électromécanique est configuré pour actionner un dispositif de chauffage et/ou de ventilation et/ou de climatisation.

7. Actionneur électromécanique (ACT) selon l'une quelconque des revendications 4 à 6, **caractérisé en ce que** le conducteur de phase (ACP) comprend un commutateur (K) configuré pour sélectivement soit relier électriquement la première borne de phase (P1) au conducteur de phase (ACP) pour commander l'entrainement en rotation du moteur électrique (MOT) dans un premier sens (DIR1), soit relier électriquement la deuxième borne de phase (P2) au conducteur de phase (ACP) pour commander l'entrainement en rotation du moteur électrique (MOT) dans un deuxième sens (DIR2), le deuxième sens (DIR2) étant opposé au premier sens (DIR1).

8. Actionneur électromécanique (ACT) selon la revendication précédente, **caractérisé en ce que** l'actionneur électromécanique (ACT) est configuré pour actionner un dispositif d'occultation.

9. Actionneur électromécanique (ACT) selon l'une quelconque des revendications 4 à 8, **caractérisé en ce que** l'interrupteur (TR) est constitué par un triac ou deux thyristors montés tête-bêche.

10. Actionneur électromécanique (ACT) selon l'une quelconque des revendications 4 à 9, **caractérisé en ce que** l'unité électronique de contrôle (UC) comprend en outre un circuit résistif (CR) relié électriquement à la première borne de phase (P1), à la deuxième borne de phase (P2), et au conducteur de neutre (ACN), le circuit résistif (CR) étant configuré pour alimenter électriquement l'unité électronique de contrôle (CC) à partir de la source de tension alternative lorsque le conducteur de phase (ACP) est raccordé électriquement à l'une ou l'autre des deux bornes de phase (P1, P2).

## Patentansprüche

1. Startverfahren eines Elektromotors (MOT), der so eingerichtet ist, dass er elektrisch an einen Phasenleiter (ACP) und einen Neutralleiter (ACN) einer Wechselspannungsquelle (U0) angeschlossen ist, wobei der Elektromotor (MOT) einen Stator umfasst, wobei der Stator des Elektromotors (MOT) zwei Wicklungen (L1, L2) umfasst, wobei die beiden Wicklungen (L1, L2) jeweils ein gemeinsames Ende (N0) umfassen, um sie elektrisch miteinander zu verbinden, wobei das gemeinsame Ende (N0) über einen Schalter (TR) elektrisch mit dem Neutralleiter (ACN) verbunden ist, wobei jede der beiden Wicklungen (L1, L2) ein anderes Ende umfasst, das jeweils eine erste Phasenklemme (P1) und eine zweite Phasenklemme (P2) bildet, wobei die erste Phasenklemme (P1) über einen Phasenverschiebungskondensator (CM) elektrisch mit der zweiten Phasenklemme (P2) verbunden ist, wobei der Phasenleiter (ACP) entweder selektiv elektrisch an die erste Phasenklemme (P1) angeschlossen ist, um den Drehantrieb des Elektromotors (MOT) in einer ersten Richtung (DIR1) zu steuern, oder elektrisch an die zweite Phasenklemme (P2) angeschlossen ist, um den Drehantrieb des Elektromotors (MOT) in einer zweiten Richtung (DIR2) zu steuern, wobei die zweite Richtung (DIR2) der ersten Richtung (DIR1) entgegengesetzt ist, wobei der Schalter (TR) von einer elektronischen Steuereinheit (CC) gesteuert wird, wobei die elektronische Steuereinheit (CC) eine Vorrichtung zum Erkennen des Nulldurchgangs (CS1, CS2) der Wechselspannung (U0) umfasst, **dadurch gekennzeichnet, dass** das Startverfahren von der elektronischen Steuereinheit (CC) umgesetzt wird, und dass die elektronische Steuereinheit (CC) während einer Startperiode (T3) den Schalter (TR) in einem Phasenwinkel in Bezug auf die Wechselspannung (U0) steuert und anschließend nach der Startperiode (T3) den Schalter (TR) in Vollwelle in Bezug auf die Wechselspannung (U0) steuert, wobei die Steuerung des Schalters (TR) in einem Phasenwinkel aus einer ersten Impulsreihe (PL1) besteht, wobei jeder Impuls der ersten Impulsreihe (PL1) in einem Phasenwinkel in Bezug auf jeden Zeitpunkt des Nulldurchgangs der Wechselspannung (U0) ausgegeben wird und eine erste Breite (PW1) aufweist, wobei die Steuerung des Schalters (TR) in Vollwelle aus einer zweiten Impulsreihe (PL2) besteht, wobei jeder Impuls der zweiten Impulsreihe (PL2) synchron mit jedem Zeitpunkt des Nulldurchgangs der Wechselspannung (U0) ausgegeben wird und eine zweite Breite (PW2) aufweist, wobei die erste Breite (PW1) und die zweite Breite (PW2) geeignet sind, den Schalter (TR) zwischen jedem Impuls der ersten Impulsreihe (PL1) und zwischen jedem Impuls der zweiten Impulsreihe (PL2) in einem geschlossenen Zustand zu halten.

2. Startverfahren nach Anspruch 1, **dadurch gekennzeichnet, dass** der Phasenwinkel der Steuerung des Schalters (TR) in einem Phasenwinkel zwischen einem Zwanzigstel und einem Achtel einer Periode der Wechselspannung (U0) liegt.

3. Startverfahren nach einem der vorhergehenden Ansprüche, **dadurch gekennzeichnet, dass** die Dauer der Startperiode (T3) so bestimmt ist, dass der Drehantrieb des Elektromotors (MOT) während der Startperiode (T3) eingeleitet wird.

4. Elektromechanischer Aktuator (ACT), der mindestens einen Elektromotor (MOT) umfasst, der so eingerichtet ist, dass er elektrisch an einen Phasenleiter (ACP) und einen Neutralleiter (ACN) einer Wechselspannungsquelle (U0) angeschlossen ist, wobei der Elektromotor (MOT) einen Stator umfasst, wobei der Stator des Elektromotors (MOT) zwei Wicklungen (L1, L2) umfasst, wobei die beiden Wicklungen (L1, L2) jeweils ein gemeinsames Ende (N0) umfassen, um sie elektrisch miteinander zu verbinden, wobei das gemeinsame Ende (N0) über einen Schalter (TR) elektrisch mit dem Neutralleiter (ACN) verbunden ist, wobei jede der beiden Wicklungen (L1, L2) ein anderes Ende umfasst, das jeweils eine erste Phasenklemme (P1) und eine zweite Phasenklemme (P2) bildet, wobei die erste Phasenklemme (P1) über einen Phasenverschiebungskondensator (CM) elektrisch mit der zweiten Phasenklemme (P2) verbunden ist, wobei der Phasenleiter (ACP) selektiv entweder elektrisch an die erste Phasenklemme (P1) angeschlossen ist, um den Drehantrieb des Elektromotors (MOT) in einer ersten Richtung (DIR1) zu steuern, oder elektrisch an die zweite Phasenklemme (P2) angeschlossen ist, um den Drehantrieb des Elektromotors (MOT) in einer zweiten Richtung (DIR2) zu steuern, wobei die zweite Richtung (DIR2) der ersten Richtung (DIR1) entgegengesetzt ist, wobei der Schalter (TR) von einer elektronischen Steuereinheit (CC) gesteuert wird, wobei die elektronische Steuereinheit (DC) eine Vorrichtung zum Erkennen des Nulldurchgangs (CS1, CS2) der Wechselspannung (U0) umfasst, **dadurch gekennzeichnet ist, dass** die elektronische Steuereinheit (DC) so eingerichtet ist, dass sie das Startverfahren nach einem der Ansprüche 1 bis 3 umsetzt.

5. Elektromechanischer Aktuator (ACT) nach dem vorhergehenden Anspruch, **dadurch gekennzeichnet, dass** die elektronische Steuereinheit (CC) eine Vorrichtung zum Erkennen des Nulldurchgangs (CS1, CS2) der Wechselspannung (U0) umfasst.

6. Elektromechanischer Aktuator (ACT) nach einem der Ansprüche 4 oder 5, **dadurch gekennzeichnet, dass** der elektromechanische Aktuator zur Betätigung einer Heizungs- und/oder Lüftungs- und/oder Klimaanlage eingerichtet ist.

7. Elektromechanischer Aktuator (ACT) nach einem der Ansprüche 4 bis 6, **dadurch gekennzeichnet, dass** der Phasenleiter (ACP) einen Schalter (K) umfasst, der so eingerichtet ist, dass er selektiv entweder die erste Phasenklemme (P1) mit dem Phasenleiter (ACP) elektrisch verbindet, um den Drehantrieb des Elektromotors (MOT) in eine erste Richtung (DIR1) zu steuern, oder die zweite Phasenklemme (P2) mit dem Phasenleiter (ACP) elektrisch verbindet, um den Drehantrieb des Elektromotors (MOT) in eine zweite Richtung (DIR2) zu steuern, wobei die zweite Richtung (DIR2) der ersten Richtung (DIR1) entgegengesetzt ist.

8. Elektromechanischer Aktuator (ACT) nach dem vorhergehenden Anspruch, **dadurch gekennzeichnet, dass** der elektromechanische Aktuator (ACT) zur Betätigung einer Verdunkelungsvorrichtung eingerichtet ist.

9. Elektromechanischer Aktuator (ACT) nach einem der Ansprüche 4 bis 8, **dadurch gekennzeichnet, dass** der Schalter (TR) aus einem Triac oder zwei gegenläufig montierten Thyristoren besteht.

10. Elektromechanischer Aktuator (ACT) nach einem der Ansprüche 4 bis 9, **dadurch gekennzeichnet, dass** die elektronische Steuereinheit (UC) ferner einen Widerstandsschaltkreis (CR) umfasst, der elektrisch mit der ersten Phasenklemme (P1), der zweiten Phasenklemme (P2) und dem Neutralleiter (ACN) verbunden ist, wobei der Widerstandsschaltkreis (CR) so eingerichtet ist, dass er die elektronische Steuereinheit (DC) von der Wechselspannungsquelle aus elektrisch versorgt, wenn der Phasenleiter (ACP) elektrisch an eine der beiden Phasenklemmen (P1, P2) angeschlossen ist.

## Claims

1. A method for starting an electric motor (MOT) configured to be electrically connected to a phase conductor (ACP) and to a neutral conductor (ACN) of an alternating voltage source (U0), the electric motor (MOT) comprising a stator, the stator of the electric motor (MOT) comprising two windings (L1, L2), the two windings (L1, L2) each comprising a common end (N0) so as to electrically link them together, the common end (N0) being electrically linked to the neutral conductor (ACN) via a switch (TR), each of the two windings (L1, L2) comprising another end constituting a first phase terminal (P1) and a second phase terminal (P2) respectively, the first phase terminal (P1) being electrically linked to the second phase terminal (P2) via a phase-shifting capacitor (CM), the phase conductor (ACP) being selectively either electrically connected to the first phase terminal (P1) to control the rotational drive of the electric motor (MOT) in a first direction (DIR1), or electrically connected to the second phase terminal (P2) to control the rotational drive of the electric motor (MOT) in a second direction (DIR2), the second direction (DIR2) being opposite to the first direction (DIR1), the switch (TR) being operated by an electronic control unit (CC), the electronic control unit (CC) comprising a device (CS1, CS2) for detecting zero crossing of the alternating voltage (U0), **characterized in that** the starting method is implemented by the electronic control unit (CC), and **in that** the electronic control unit (CC) controls, during a starting period (T3), the switch (TR) in phase angle with respect to the alternating voltage (U0), then, following the starting period (T3), controls the switch (TR) in full wave with respect to the alternating voltage (U0), the phase angle control of the switch (TR) consisting of a first series of pulses (PL1), each pulse of the first series of pulses (PL1) being emitted in phase angle with respect to each instant of zero crossing of the alternating voltage (U0) and having a first width (PW1), the full wave control of the switch (TR) consisting of a second series of pulses (PL2), each pulse of the second series of pulses (PL2) being emitted in synchronism with each instant of zero crossing of the alternating voltage (U0) and having a second width (PW2), the first width (PW1) and the second width (PW2) being adapted to maintain the switch (TR) in a closed state between each pulse of the first series of pulses (PL1) and between each pulse of the second series of pulses (PL2).

2. The starting method according to claim 1, **characterized in that** the phase angle of the phase angle control of the switch (TR) is comprised between one twentieth and one eighth of a period of the alternating voltage (U0).

3. The starting method according to any one of the preceding claims, **characterized in that** the duration of the starting period (T3) is determined so that the rotational drive of the electric motor (MOT) is initiated during the starting period (T3).

4. An electro-mechanical actuator (ACT) comprising at least one electric motor (MOT) configured to be electrically connected to a phase conductor (ACP) and to a neutral conductor (ACN) of an alternating voltage source (U0), the electric motor (MOT) comprising a stator, the stator of the electric motor (MOT) comprising two windings (L1, L2), the two windings (L1, L2) each comprising a common end (N0) so as to electrically link them together, the common end (N0) being electrically linked to the neutral conductor (ACN) via a switch (TR), each of the two windings (L1, L2) comprising another end constituting a first phase terminal (P1) and a second phase terminal (P2) respectively, the first phase terminal (P1) being electrically linked to the second phase terminal (P2) via a phase-shifting capacitor (CM), the phase conductor (ACP) being selectively either electrically connected to the first phase terminal (P1) to control the rotational drive of the electric motor (MOT) in a first direction (DIR1), or electrically connected to the second phase terminal (P2) to control the rotational drive of the electric motor (MOT) in a second direction (DIR2), the second direction (DIR2) being opposite to the first direction (DIR1), the switch (TR) being operated by an electronic control unit (CC), the electronic control unit (CC) comprising a device (CS1, CS2) for detecting zero crossing of the alternating voltage (U0), **characterized in that** the electronic control unit (CC) is configured to implement the starting method according to any one of claims 1 to 3.

5. The electro-mechanical actuator (ACT) according to the preceding claim, **characterized in that** the electronic control unit (CC) comprises a device (CS1, CS2) for detecting zero crossing of the alternating voltage (U0).

6. The electro-mechanical actuator (ACT) according to any one of claims 4 or 5, **characterized in that** the electro-mechanical actuator is configured to actuate a heating and/or ventilation and/or air conditioning device.

7. The electro-mechanical actuator (ACT) according to any one of claims 4 to 6, **characterized in that** the phase conductor (ACP) comprises a switch (K) configured to selectively either electrically link the first phase terminal (P1) to the phase conductor (ACP) to control the rotational drive of the electric motor (MOT) in a first direction (DIR1), or electrically link the second phase terminal (P2) to the phase conductor (ACP) to control the rotational drive of the electric motor (MOT) in a second direction (DIR2), the second direction (DIR2) being opposite to the first direction (DIR1).

8. The electro-mechanical actuator (ACT) according to the preceding claim, **characterized in that** the electro-mechanical actuator (ACT) is configured to actuate a blackout device.

9. The electro-mechanical actuator (ACT) according to any one of claims 4 to 8, **characterized in that** the switch (TR) consists of a triac or two back-to-back mounted thyristors.

10. The electro-mechanical actuator (ACT) according to any one of claims 4 to 9, **characterized in that** the electronic control unit (UC) further comprises a resistive circuit (CR) electrically linked to the first phase terminal (P1), to the second phase terminal (P2), and to the neutral conductor (ACN), the resistive circuit (CR) being configured to electrically power the electronic control unit (CC) from the alternating voltage source when the phase conductor (ACP) is electrically connected to either one of the two phase terminals (P1, P2).
